(19) Europäisches Patentamt / European Patent Office / Office européen des brevets

(11) **EP 2 956 797 B1**

(12) **EUROPÄISCHE PATENTSCHRIFT**

(45) Veröffentlichungstag und Bekanntmachung des Hinweises auf die Patenterteilung:
**09.09.2020  Patentblatt 2020/37**

(21) Anmeldenummer: **14713363.1**

(22) Anmeldetag: **15.01.2014**

(51) Int Cl.:
**G06K 9/52** (2006.01)     **G06K 9/62** (2006.01)
**G06T 7/73** (2017.01)     **G01S 15/89** (2006.01)

(86) Internationale Anmeldenummer:
**PCT/DE2014/100009**

(87) Internationale Veröffentlichungsnummer:
**WO 2014/124628 (21.08.2014 Gazette 2014/34)**

(54) **VERFAHREN ZUM IDENTIFIZIEREN ODER ZUM ORTEN EINES UNTERWASSEROBJEKTS, ZUGEHÖRIGER RECHNER ODER MESSSYSTEM, SOWIE WASSERFAHRZEUG**

METHOD FOR IDENTIFYING OR LOCATING AN UNDERWATER OBJECT, ASSOCIATED COMPUTER OR MEASUREMENT SYSTEM, AND A WATER VEHICLE.

PROCÉDÉ POUR IDENTIFIER OU LOCALISER UN OBJET SOUS-MARIN, ORDINATEUR OU SYSTÈME DE MESURE CORRESPONDANT, ET VÉHICULE AQUATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2013  DE 102013101510**

(43) Veröffentlichungstag der Anmeldung:
**23.12.2015  Patentblatt 2015/52**

(73) Patentinhaber: **ATLAS ELEKTRONIK GmbH
28309 Bremen (DE)**

(72) Erfinder: **LORENSON, Anton
28277 Bremen (DE)**

(74) Vertreter: **thyssenkrupp Intellectual Property GmbH
ThyssenKrupp Allee 1
45143 Essen (DE)**

(56) Entgegenhaltungen:
**US-A- 5 161 204     US-A- 5 339 275**

**Beschreibung**

Die Erfindung betrifft ein Verfahren zum Identifizieren und/oder zum Orten eines Unterwasserobjekts, insbesondere einer Unterwasserpipeline, einen Rechner der das Verfahren durchführt, ein Messsystem, welches den Rechner umfasst und ein Wasserfahrzeug, welches den Rechner oder das Messsystem aufweist.

Beim Orten und Identifizieren von Unterwasserobjekten, wie beispielsweise Pipelines oder Detonationskörper, werden insbesondere mittels Sonaren (Sound Navigation and Ranging) ermittelte Objektbilder mit in einer Datenbank befindlichen Referenzbildern verglichen. Bei diesem Vergleich werden beispielsweise Mustererkennungsverfahren eingesetzt.

Bei dem Mustererkennen werden jeweils die Pixel oder erkannte Strukturen des ermittelten Szenenbildes mit den Pixeln der bekannten Strukturen verglichen. Hinzu kommt, dass die Orientierung der gesuchten Struktur oder Objekts unbekannt ist, sodass Drehungen eines der Bilder und Skalierungen rechentechnisch zu beachten sind.

Dies ist so rechenintensiv, dass das Identifizieren oder das Orten nicht echtzeitfähig durchführbar ist, da die Wiederholgeschwindigkeiten der Objektbildbestimmung durch das Sonar größer sind als die Berechnungsgeschwindigkeiten für das Identifizieren oder das Orten.

Daraus folgt, dass zum einen nicht sämtliche Objektbilder ausgewertet werden und insbesondere dazu, dass Unterwassergeräte, wie beispielsweise U-Boote oder Unterwasserroboter, ihre Näherungsgeschwindigkeit an das Objekt verringern müssen.

Zudem ergeben sich Schwierigkeiten beim Identifizieren und Orten des Unterwasserobjekts, da die Objektbilder häufig lediglich niedrige Signal-zu-Rausch-Verhältnisse aufweisen, welche beispielsweise auf inhomogene oder turbulente Strömungen zurückzuführen sind.

In der US 5 161 204 A ist die Gewinnung eines Merkmalsvektor aus einem Messszenenbild anhand von 2D-Transformationen oder deren Kombinationen zum Auffinden von Bildelementen beschrieben.

Aufgabe der Erfindung ist, den Stand der Technik zu verbessern.

Gelöst wird die Aufgabe durch ein Verfahren zum Identifizieren und/oder zum Orten eines Unterwasserobjekts, insbesondere einer Unterwasserpipeline, wobei das Verfahren folgende Schritte umfasst

- Generieren oder Verwenden eines Modellbildes des Unterwasserobjekts,

- Spektrales Transformieren des Modellbildes, insbesondere Bestimmen eines 2D-Leistungsdichtespektrums des Modellbildes, sodass eine 2D-Modellbildreferenz vorliegt,

- Ermitteln oder Verwenden eines ersten Messszenenbildes, wobei das Messszenenbild insbesondere ein Bildausschnitt eines nach dem Unterwasserobjekt durchsuchten Geländes umfasst,

- Spektrales Transformieren des ersten Messszenenbildes, insbesondere Bestimmen eines 2D-Leistungsdichtespektrum des Messszenebildes, sodass eine 2D-Objektbildreferenz vorliegt,

- Extrahieren eines Richtungsmodellbildanteils aus der 2D-Modellbildreferenz und Extrahieren eines Richtungsszenenbildanteils, sodass ein 1D-Modellbildmerkmalsvektor und ein 1D-Messszenenmerkmalsvektor vorliegen,

- Korrelieren des 1D-Modellbildmerkmalsvektor mit dem 1D-Messszenenmerkmalsvektor sodass eine Übereinstimmungsinformation in Form der maximalen Korrelationskoeffizienten und der sich aus den Korrelationsmaxima ergebenden Richtung vorliegt,

- Urteilen über das eventuelle Vorhandensein des gesuchten Unterwasserobjektes und einer sich aus dem Korrelationskoeffizienten resultierenden statistischen Signifikanz, und

- Bestimmen einer Objektausrichtung in einer Messszene anhand einer Richtungslage des maximalen Korrelationskoeffizienten.

Somit kann ein robustes echtzeitfähiges Verfahren zur Verfügung gestellt werden, bei dem Objekte bei niedrigen Signal-zu-Rausch-Verhältnissen mit hoher Zuverlässigkeit identifizierbar oder ortbar sind. Mit vorliegendem Verfahren kann eine sichere Identifizierung oder Ortung bei ungünstigen Signal-zu-Rausch-Verhältnissen erreicht werden.

Zudem eignet sich das hier vorgestellte Verfahren zur autonomen Mustererkennung. Auch kann die Näherungsgeschwindigkeit oder eine Aufklärungsgeschwindigkeit eines Unterwasserroboters oder eines U-Boots erhöht werden, da der "Flaschenhals" nunmehr bei den Repititionsraten (Wiederholraten) des Sonars liegt.

Folgendes Begriffliche sei erläutert:

Unter "Identifizieren" ist insbesondere das eindeutige Erkennen einer Struktur auf einem vorgegebenen statistischen Signifikanzniveau zu verstehen. Beispielsweise kann dies soweit gehen, dass ein Unterwasserdetonationskörper von anderen Unterwasserobjekten unterschieden werden kann. Auch ein Klassifizieren nach Bauart und Typ kann ermöglicht werden.

Beim "Orten" wird die Lage eines Unterwasserobjekts ermittelt. Insbesondere bei Gas- oder Öl-Pipelines ist die Kenntnis über den Verlauf der Pipeline für Wartung und Reparatur von größter Bedeutung, sodass mit dem Orten derartige Tätigkeiten erst sinnvoll und zeiteffizient durchführbar sind.

Der Begriff "Unterwasserobjekt" umfasst sämtliche natürliche und/oder technische Strukturen, welche mittels bildgebender Verfahren (Sonar, Optik) ermittelbar sind. Insbesondere umfasst sind Pipelines, bemannte oder unbemannte Unterwasserfahrzeuge, Bohrtürme, Off-Shore-Windenergieanlagenfundamente oder auch Kabel bis unterhalb von Kabeldicken von 10cm.

Das "Generieren eines Modellbildes" umfasst das Erstellen einer Datenrepräsentanz des zu identifizierenden oder zu ortenden Unterwasserobjekts. Dies kann ein Simulieren des Unterwasserobjekts als auch das Bearbeiten eines Unterwasserobjektbildes umfassen. Beim "Verwenden eines Modellbildes" wird eine bereits simulierte oder bearbeitete Datenrepräsentanz des Unterwasserobjekts, beispielsweise aus einer Datenbank, verwendet.

Beim "Ermitteln eines Messszenenbildes" werden insbesondere Messdaten eines Sonars bildlich aufbereitet. Auch kann das Ermitteln anhand optischer Daten (z.B. mittels einer Kamera) erfolgen.

Für den Fall, dass beispielsweise Objektdaten aufgezeichnet wurden und diese später analysiert werden, kann ein "Verwenden eines Objektbildes" durchgeführt werden. So werden insbesondere Sonardaten eines unbemannten Unterwasserfahrzeugs aufgezeichnet und später an Bord eines Schiffes mittels des beschriebenen Verfahrens ausgewertet.

Das "Spektrales Transformieren" kann sowohl auf den jeweiligen Gesamtausschnitt der Bilder (Objekt/Modell) oder auf Teilausschnitte angewandt werden. Insbesondere können Quadratische Ausschnitte verwendet werden. Mit dem spektralen Transformieren kann insbesondere ein Raumfrequenzspektrum erzeugt werden. Eine einfache Umsetzung ist durch eine diskrete 2D-Fourier-Transformation oder eine 2D-FFT (Fast Fourier Transformation) gegeben. Insbesondere kann ein "Bestimmen eines 2D-Leistungsspektrums" (LDS) erfolgen. Dabei wird beispielsweise mathematisch das Betragsquadrat der 2D-FFT gebildet.

Vorteilhaft dabei sind die systemtheoretischen Eigenschaften des 2D-LDS, welche als eine Abbildung des Originalbereichs zu linearen Verschiebungen des Bildobjekts im Originalbereich, unter der Annahme, dass die Rauschenergie gleich Null ist, invariant und geben gleichzeitig die Verdrehungen des Bildobjekts wider. Hierzu sei auf Jae. S. Lim: Two-Dimensional Signal and Image Processing, PTR Prentice Hall, Inc., A Simon and Schuster company, Engelwood Cliffs, New Jersey, 1990, verwiesen.

Das jeweilige Ergebnis des spektralen Transformierens ist für das Modellbild die "2D-Modellbildreferenz" und für das Messszenenbild die "2D-Messszenenbildreferenz". In einfachen Fällen kann dies jeweils einer mathematischen 2D-Matrix entsprechen.

Durch das "Extrahieren eines Richtungsmodellbildanteils" und des "Extrahierens eines Richtungsobjektbildanteils" kann ein wesentlicher Beitrag zur Reduktion eines Rechenaufwandes geleistet werden. Das Ergebnis des jeweiligen Extrahierens ist ein "1D-Modellbildmerkmalsvektor" und entsprechend ein "1D-Messszenenbildmerkmalsvektor".

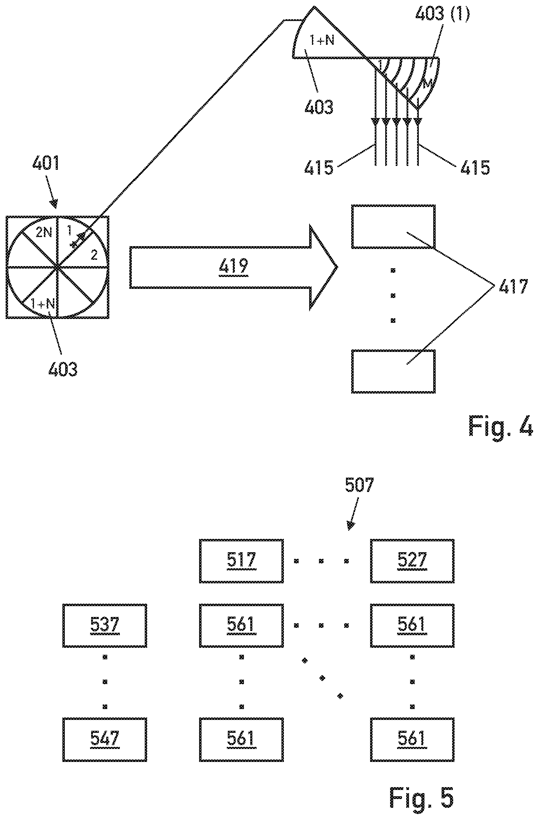

Insbesondere werden beim Extrahieren des jeweiligen Richtungsanteils unter diskreter Sektorintegration und Mittelwertbildung, insbesondere 2N-Mal per 360° und M-Mal über die Entfernung im LDS, die jeweiligen radialen Spektralvektoren gewonnen. Dabei wird insbesondere die Symmetrie-Eigenschaft des LDS eines reellen 2D-Signals ausgenutzt und nur jeweils ein Teil des Sektorenpaares, dies entspricht gegenüberliegenden Sektoren, oder eine geeignete Mittelung beider verwendet (siehe Fig. 4).

Dies kann den Vorteil haben, dass die Speichergröße reduziert wird, wobei die Identifizierungs- und Ortungsmerkmale beibehalten werden. Die sich ergebenen 1D-Signale können die wichtige Eigenschaft ausbilden, dass sie abgesehen vom Rauschen annähernd quadrierte Direchlet-Kerne (oder allgemeiner Direchlet-Kernpakete) darstellen, welche der der Breite des gesuchten Objektes entsprechen. Hierzu sei verwiesen auf K.D. Kammeyer, K. Kroschel: Digitale Signalverarbeitung, Filterung und Spektralanalyse, 7. Aufl. GWV Fachverlage GmbH, Wiesbaden, 2009.

Beim "Korrelieren" wird insbesondere mathematisch ein (Wahrscheinlichkeits-)Wert ermittelt, welcher eine Information bzgl. einer Übereinstimmung darstellt.

In einer Ausprägungsform wird das Verfahren für ein zweites Messszenenbild oder drittes Messszenenbild oder für weitere Messszenenbilder angewandt.

Somit können unterschiedliche Objektbilder ausgewertet werden. Insbesondere können direkt hintereinander aufgenommene Messszenenbilder mit einem Modellbild abgeglichen werden. Dies kann somit eine echtzeitfähige Durchsuchung oder Durchkämmung eines bestimmten Gebietes beispielsweise für autonome Unterwasserfahrzeuge gewährleisten.

Um eine Klassifizierung bzgl. der Wahrscheinlichkeit einer Übereinstimmung von Objektbild und Modellbild zu ermöglichen, kann ein Bewerten der Übereinstimmungsinformation mittels eines Signifikanzniveaus erfolgen. Liegt eine Übereinstimmungsinformation oberhalb (oder unterhalb) des Signifikanzniveaus, so kann ein Identifizierungstreffer oder eine Objektausrichtung als gesichert angenommen werden.

In einer weiteren Ausprägungsform erfolgt beim Bewerten der Übereinstimmungsinformation das Ermitteln eines Maximums oder mehrerer Maxima. So können gleichzeitig mehrere sich in der Messszene überlagernde Objekte auf vorgegebenem Signifikanzniveau identifiziert werden und die Objektausrichtungen bestimmt werden.

Um die Richtungsbildanteile zu ermitteln, können die 2D-Modellbildreferenz (LDS) und/oder die 2D-Objektbildreferenz(LDS) segmentiert werden, sodass Sektoren vorliegen.

Nach einer weiteren Ausführungsform werden die 2D-Modellbildreferenz(LDS) und/oder die 2D-Objektbildreferenz(LDS) unterteilt, sodass Abschnitte vorliegen.

Verfahren nach einem der vorherigen Ansprüche, dadurch gekennzeichnet, dass vor dem jeweiligen spektralen Transformieren das Messszenenbild und/oder das Modellbild aufbereitet werden. Die Aufbereitung kann Folgendes einzeln oder in Kombination mit einschließen:

- Ändern der Abtastrate (Angleichung der Modellabtastrate des Modellbildes und Messszenenbildes)unter einem Ausnutzen einer der Methoden wie Nearest-Neighbor, bilinearen oder bikubischen oder Barnes oder Lanzcos oder Inverse Distance Weighting oder spline oder Kriging oder anderen Interpolationsmethoden,
- Subtrahieren eines Gleichanteils mit dem Zweck der Kontrasterhöhung
- Potenzieren diskreter Messwerte mit dem Zweck der Kontrasterhöhung
- Glättung des Messszenenbildes mittels eines oder mehreren aufeinander folgenden Medianfilters und/oder Mittelwertfilters mit dem Zweck der Rauschunterdrückung und Ausreißer-Werte Eliminierung
- Durchführung einer Opening oder Closing Operation mit dem Zweck der Szenenrekonstruktion bei ungünstigen SNR (Signal-to-Noise-Ratio) Messwerten.

In einer weiteren Ausgestaltung der Erfindung wird die Aufgabe gelöst durch einen Rechner, der derart eingerichtet ist, dass er ein zuvor beschriebenes Verfahren durchführt.

Somit kann eine Vorrichtung bereitgestellt werden, die das zuvor beschriebene Verfahren durchführt.

Der vorliegende "Rechner" kann sowohl ein Standardrechner als auch ein Rechner sein, welcher entsprechende FPGAs (Field Programmable Gate Array) oder DSPs (Digital Signal Processor) aufweist.

Um eine gekapselte Vorrichtung bereitzustellen, welche in autonomen oder bemannten Unterwasserfahrzeugen einsetzbar ist, kann die Aufgabe gelöst werden durch ein Messsystem mit einem Sonar, welches einen zuvor beschriebenen Rechner aufweist, wobei das Sonar die jeweiligen Objektbilder ermittelt. Alternativ, kann das Messsystem statt des Sonars oder ergänzend ein optisches Kamerasystem aufweisen.

In einer abschließenden Ausgestaltung der Erfindung wird die Aufgabe gelöst durch ein Wasserfahrzeug, welches einen zuvor beschriebenen Rechner und/oder ein zuvor beschriebenes Messsystem aufweist.

Wasserfahrzeuge in diesem Sinne können insbesondere U-Boote oder unbemannte Wasserfahrzeuge sein.

Im Weiteren wird die Erfindung anhand von Ausführungsbeispielen erläutert. Es zeigen

Figur 1    eine schematische Darstellung der Grundzüge des Verfahrens,
Figur 2    eine schematische Darstellung einer oberflächensimulierten Pipeline,
Figur 3    eine schematische Darstellung eines Schattenwurfs der simulierten Pipeline,
Figur 4    eine schematische Darstellung eines Extrahierens eines Richtungsbildanteils (Objekt/Modell),
Figur 5    eine schematische Darstellung einer Korrelationsmatrix mit einsprechender Benamung der Spalten und Zeilen,
Figur 6    eine schematische Darstellung des spektralen Transformierens (LDS Bilden) des Modellbilds und
Figur 7    eine schematische Gesamtdarstellung des erfindungsgemäßen Verfahrens.

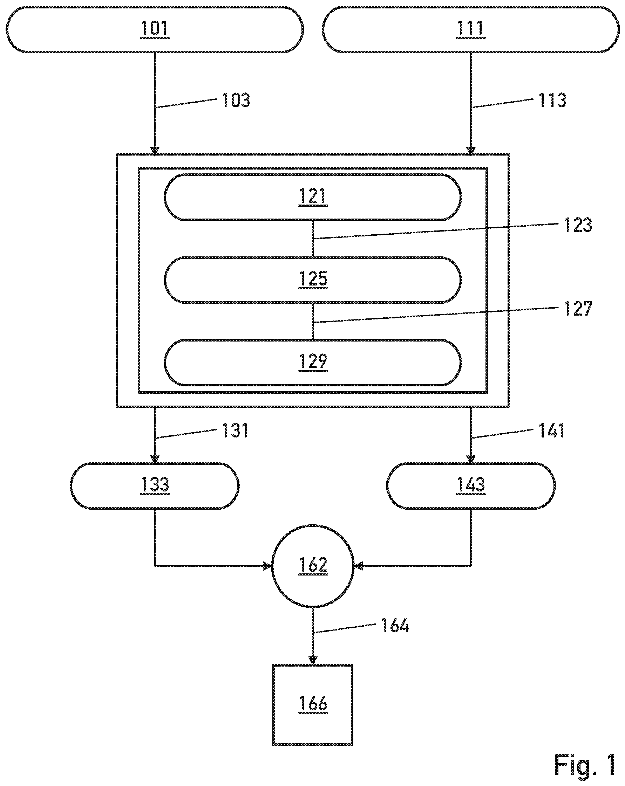

Das Verfahren kann auf folgende (Grund-)Einzelschritte zurückgeführt werden (siehe Fig. 1):

Simulation 101 des gesuchten Objektes in einer idealen (rauschfreien) Umgebung unter Ausnutzung eines linearen Ray-Tracings, sodass ein Bild 103 des gesuchten Objekts vorliegt.

Messtechnisches Bestimmen 111 eines Sonar-Bildes 113 und Vorverarbeitung 121 des aus dem Sonar-Messverfahren gewonnenen Bildes (Messszenenbild) 113 und Modellbildes 103, sodass ein aufbereitetes Messszenen- und Modellbild 125 vorliegen.

Vorverarbeitung 121 und Spektrales Transformieren 125 des simulierten Modellbilds und des Objektbildes 123, sodass das jeweilige 2D-Spektrum 127 des Messszenenbildes und des Modellbildes 123 vorliegt.

Anschließend erfolgt für die jeweiligen 2D-Spektren 127 Betragsquadratbilden (LDS) ein Extrahieren 129 des richtungsrelevanten Anteils, sodass ein 1D-Modellvektor 133 und 1D-Objektvektoren 143 vorliegen mit anschließendem paarweise Korrelieren 162 der so gewonnenen Merkmalsvektoren 133/143, sodass ein Korrelationsergebnis 164 vorliegt. Die ermittelten Korrelationsergebnisse 164 werden mittels eines Signifikanzniveaus bewertet 166.

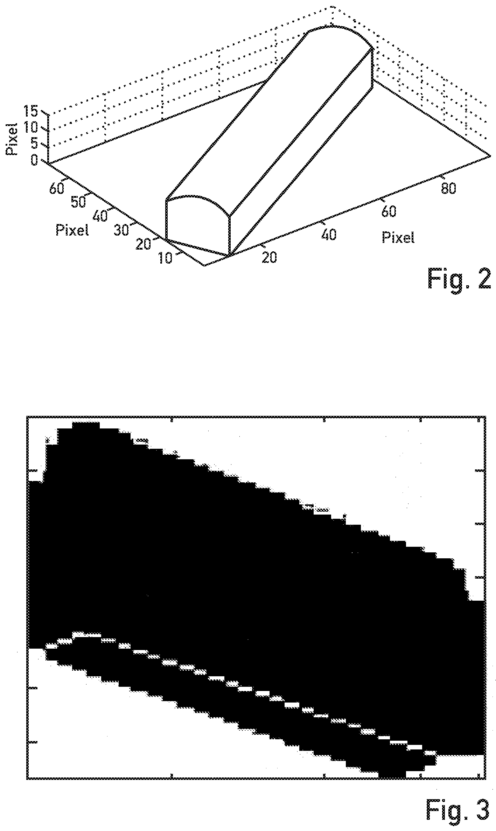

Generieren eines Modellbildes (Fig. 2)

Die Suchreferenz wird durch eine Simulation gewonnen. Bei der Objektsimulation (Modellbild) wird die Oberfläche eines Objektes durch Eintragungen einer 2D Matrix kodiert.

Anschließend wird der lineare Schattenwurf kalkuliert, da dies das eigentlich zu verwendende Modellbild (Fig. 3) vervollständigt.

Spektrales Transformieren (Erzeugen des LDS)

Eine Ausnutzung der spektralen Transformationen des Originalbereichs bietet diverse Vorteile:

- Eine Invarianz zu den Verschiebungen des Objektes im Originalbereich, so entfällt aufwendiges Nachjustieren des Objekts im Modellbild 103 bzgl. Lage im Modellbild 103 und damit verbundener Rechenaufwand.
- Durch einfache punktweise Multiplikationen können Bandpassfilter zur Minimierung der Rauscheinwirkung realisiert werden
- Einfache Richtungsmerkmal-Gewinnung wegen Richtungskorrespondenz im Spektral- und Originalbereich

Das Raumfrequenzspektrum 127 eines Bildes 103, 113, 123 ist im diskreten Fall durch eine diskrete zweidimensionale Fourier-Transformation gegeben (Formel 1.1):

$$F(u,v) = \sum_{x=1}^{N} \sum_{y=1}^{M} f(x,y) e^{-j2\pi(ux+vy)}$$

wobei u,v diskrete Werte der Raumfrequenzen, f(x,y) Bildmatrixwerte und M, N Anzahl der Zeilen und Spalten darstellen.

Das mathematische Betragsquadrat einer diskreter 2D-Fouriertransformierten liefert das LDS (Formel 1.2):

$$F_{LDS}(u,v) = \left| F(u,v) \right|^2$$

Durch seine systemtheoretische Eigenschaft ist das 2D Leistungsdichtespektrum als eine Abbildung des Originalbereiches zu den linearen Verschiebungen des Bildobjektes im Originalbereich unter Annahme, dass die Rauschenergie gleich Null ist, invariant.

Extrahieren eines Richtungsbildanteils (Modell/Objekt; Fig. 4)

Aus dem LDS 401 werden im Zuge der Merkmalsvektoraufstellung 419 die 2N Mal im Winkelmaß gleiche Sektoren per 360° radialen Spektralvektoren 417 gewonnen. Jeder dieser Vektoren wird in jeweils M über die Radiale Entfernung gleich breite Abschnitte unterteilt.

Die Abschnittsmittelwerte 415 werden für jedes Sektorpaar 403 und 403(1) berechnet Dabei wird die Symmetrie-Eigenschaft des Leistungsdichtespektrums eines reellen 2D Bildes ausgenutzt und nur jeweils ein Teil des Sektorenpaares (gegenüberliegende Sektoren 403(1), 403(1+N) oder geeignete Mittelung beider benutzt.

So reduziert sich die Speichergröße und die detektierungsrelevanten Merkmale werden beibehalten. Diese 1D-Signale haben eine wichtige Eigenschaft: sie stellen annähernd quadrierte Dirichlet Kerne (im Allgemeinen Dirichlet-Kernpakete) dar, welche der Breite (oder der Beschaffenheit der Abbildung in der transversalen Richtung) des gesuchten Objektes, entsprechen.

Korrelation und Signifikanzniveau (Fig. 5)

Anschließend werden die beiden Vektoren (aus jeweils Objektbild 123 und Modellbild 103) zum Berechnen eines Korrelationskoeffizienten r (als Schätzer) herangezogen (Formel 1.3):

$$r = \frac{1}{N-1} \frac{\sum_{i=1}^{N}\left(x(i)-\frac{1}{N}\sum_{i=1}^{N}x(i)\right)\left(y(i)-\frac{1}{N}\sum_{i=1}^{N}y(i)\right)}{\sqrt{\frac{1}{N-1}\sum_{i=1}^{N}\left(x(i)-\frac{1}{N}\sum_{i=1}^{N}x(i)\right)^2 \frac{1}{N-1}\left(y(i)-\frac{1}{N}\sum_{i=1}^{N}y(i)\right)^2}}$$

Nach J. S. Bendat, A.G. Piersol: Random Data: Analysis and Measurment Procedures, Wiley & Sons, Inc, Los Angeles, 1971 kann die Verteilung einer Zufallsvariablen w, sich wie folgt berechnen lassen (Formel 1.4):

$$\omega = \frac{1}{2}\ln\left[\frac{1+r}{1-r}\right]$$

wobei r die aus Messverfahren gewonnene Korrelationskoeffizientschätzung ist, und w annähernd als normalverteilt mit einem Mittelwert von

$$\mu_w = \frac{1}{2}\ln\left[\frac{1+\rho_{xy}}{1-\rho_{xy}}\right]$$

betrachtet werden kann, wobei $\rho$ der wahre Wert des Korrelationskoeffizients ist. Dabei bedeutet $\rho=0$ eine Nichtkorrelation. Zudem gilt dann für die Varianz (Formel 1.5) :

$$\sigma^2{}_w = \frac{1}{N-3}$$

wobei N die Größe der Messreihe ist.

Davon ausgehend wird als Hypothese überprüft, ob die Annahme, dass der wahre Korrelationskoeffizient gleich Null ist, zutrifft. Dann wird das Intervall der Akzeptanz der Hypothese durch (Formel 1.6)

$$-z_{\alpha/2} \leq \frac{\sqrt{N-3}}{2}\ln\left[\frac{1+r}{1-r}\right] \leq z_{\alpha/2}$$

angegeben.

Nach Dennis V. Lindley, William F. Scott: New Cambridge Statistical Tables, Cambridge University Press 2003 ist $\alpha$ das Signifikanzniveau in % und a/2- a/2-prozentiger Wert der Normalverteilung, diejenige Zahl, die von einer normalverteilten Zufallsvariablen mit der Wahrscheinlichkeit a/2 überschritten wird.

Unter Ausnutzung dieses Hypothesentests wird auf einem bestimmten Signifikanzniveau die Hypothese der NichtKorrelation akzeptiert oder abgelehnt, damit ist das gesuchte Objekt detektiert, gleichzeitig wird seine Orientierung im Bild bestimmt.

Dabei wird in einer diskreten zyklischen Korrelationskoeffizienten Bildung (Aufstellung einer Korrelationskoeffizienten-Matrix) gleichzeitig nach einem Maximum-Wert oder mehreren maximalen Werten und ihrer Lage gesucht, siehe Fig. 5.

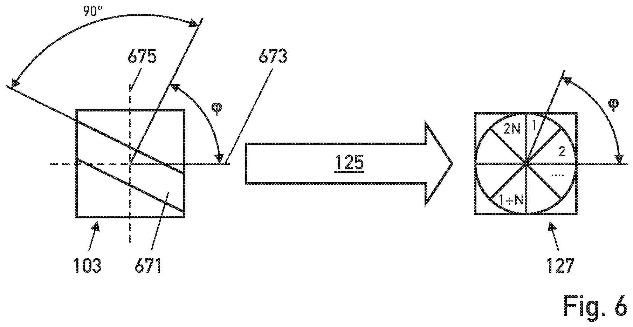

Aufgrund der Symmetrie der Korrelationskoeffizienten-Matrix 507, reicht es aus, lediglich die erste Zeile auszuwerten. Da die Richtung der Längsachse des Modellobjekts bekannt ist, und diese Richtung mit dem 1-ten Sektor des Modellbild LDS 401 korrespondiert, reicht es aus, das aus diesem Sektor hergeleitete 1D-Signal (s. Fig. 4) zur Auswertung heranzuziehen, vgl. zudem mit Fig. 6.

Hier ist die Sektornummer K=1, und die zur Objektlängsachse orthogonale Richtung durch den Winkel $\varphi$ ge-geben. Diese Information ist aus dem Modellbild apriori bekannt.

So reduziert sich die auszuwertende Menge an Korrelationskoeffizienten (siehe Fig.5) auf den Korrelationsko-effizientenvektor $\overline{R}_{K,i}, i \in 1,...,M$. Mit Formel 1.7

$$r_w \underset{w=\arg\max(i)}{=} \max\left(\overline{R}_{K,i}, i \in 1,...,M\right)$$

So liefert jedes Korrelationsmaximum nach der Formel 1.7 neben dem Signifikanzniveau (Formel 1.6) und gleichzeitig den Aspektwinkel des so im Originalbild aufgefundenen Objektes bezüglich des Aspektwinkels $\varphi$ des simu-lierten Objektes (siehe Fig. 6.)

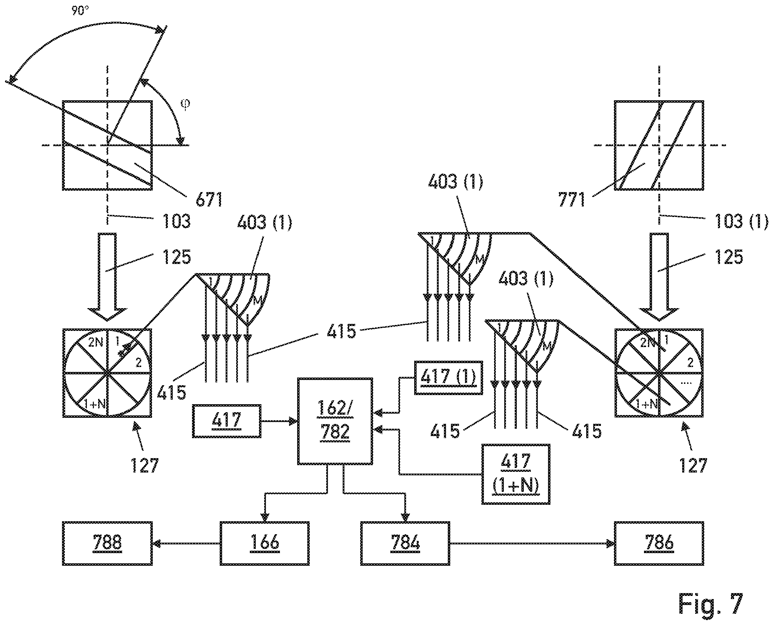

Im Folgenden wird das Gesamtverfahren nochmal in einzelnen Schritten anhand der Fig. 7 detailliert erläutert:

Aus jeweils dem Modellbild 103 und Messszenenbild 103(1) wird nach Vorverarbeitung und Fourier-Transformation mit anschließender Quadrierung 125 das LDS 127 gebildet. Aus dem LDS 127 werden im Zuge der Merkmalsvektoraufstellung (LDS 2N Mal per 360° in im Winkelmaß gleiche Sektoren unterteilt, jeder dieser Sektoren in jeweils M über die Radiale Entfernung gleich breite Abschnitte) die jeweils radialen Spektralvektoren 417 wie folgt gewonnen: Die Abschnittsmittelwerte 415 werden für jedes Sektorpaar 403 und 403(1) (s. Fig.4) berechnet Dabei wird die Symmetrie-Eigenschaft des Leistungsdichtespektrums eines reellen 2D Signals ausgenutzt und nur jeweils ein Teil des Sektorenpaares (gegenüberliegende Sektoren 403(1), 403(1+N) oder geeignete Mittelung beider benutzt.

Für jedes so gewonnene radiales Spektralvektoren-Paar (radialer Spektralvektor 417 des Modellbild-LDS 417 und N radiale Spektralvektoren 417(1) bis 417(1+N) des Messszenenbild-LDS) wird ein Korrelationskoeffizient 162 bestimmt. Anschließend werden eins oder mehrere maximale Korrelationswerte 782 bestimmt und dazu gehörendes radiales Spektralvektoren Paarindex 1 bis N vorgemerkt.

Jeder der maximalen Korrelationskoeffizienten wird nach Signifikanzniveau mittels vorgegebenen Signifikanz-Schranke 166 geprüft und so eine oder mehrere Detektionsentscheidungen 788 getroffen.

Für jede Detektion aus 788 werden unter Auswertung der im 782 gespeicherten Paarindizien die Objektlagen im Messszenenbild detektierter Objekte (Winkel zwischen der Objekthauptachse und Bildordinate) 786 bestimmt.

Bezugszeichenliste

| | |
|---|---|
| 101 | Parametrisierung und Modellbildgenerierung |
| 103 | Modellbild |
| 111 | Generierung des Messszenenbildes /Sonarbildes |
| 113 | Messszenenbild |
| 121 | Vorverarbeitung |
| 123 | vorverarbeitetes Modellbild oder Messszenenbild |
| 125 | Generierendes 2D-LDS des Modellbildes oder des Messszenenbildes |
| 127 | 2D-Spektrum des transformierten Modellbildes oder Messszenenbildes |
| 129 | Extrahieren des richtungsrelevanten Anteils |
| 131 | 1D-Vektor (Modellbild) |
| 133 | Modellbildmerkmalsvektor |
| 141 | 1D-Vektor (Objektbild) |
| 143 | Messszenenbildmerkmalsvektor |
| 162 | Korrelation |
| 164 | Korrelationsergebnis (Zahl) |
| 166 | Bewerten des Korrelationsergebnisses mittels eines Signifikanzniveaus |
| 401 | LDS |
| 403 | Integrationssektor |
| 415 | Abschnittsmittelwerte |

| 417 | 1D-Signal |
|---|---|
| 419 | Sektorintegration |
| 507 | Korrelationsmatrix |
| 517 | 1. 1D-Signal der Länge M (Objektbild) |
| 527 | N. 1D-Signal der Länge M (Objektbild) |
| 537 | 1. 1D-Signal der Länge M (Modellbild) |
| 547 | N. 1D-Signal der Länge M (Modellbild) |
| 561 | Korrelationskoeffizienten der Korrelationsmatrix 507 |
| 671 | synthetisches Objekt (Pipeline) |
| 673 | Abszisse |
| 675 | Ordinate |
| 771 | Objekt im Sonarbild |
| 782 | Maximumbestimmung |
| 784 | Versatzbestimmung Objekt/Modell |
| 786 | Objektlage im Messszenenbild (Winkel zwischen der Objekthauptachse und Bildordinate) |
| 788 | Detektionsentscheidung |

**Patentansprüche**

1. Verfahren zum Identifizieren und/oder zum Orten eines Unterwasserobjekts, insbesondere einer Unterwasserpipeline, wobei das Verfahren folgende Schritte umfasst

- Generieren oder Verwenden eines Modellbildes (103) des Unterwasserobjekts,
- Spektrales Transformieren des Modellbildes, insbesondere Bestimmen eines 2D-Leistungsdichtespektrums des Modellbildes, sodass eine 2D-Modellbildreferenz vorliegt,
- Ermitteln oder Verwenden eines ersten Messszenenbildes (113), wobei das Messszenenbild insbesondere einen Bildausschnitt eines nach dem Unterwasserobjekt durchsuchten Geländes umfasst, und
- Spektrales Transformieren (125) des ersten Messszenenbildes, insbesondere Bestimmen eines 2D-Leistungsdichtespektrum des Messszenebildes, sodass eine 2D-Objektbildreferenz vorliegt,
- Extrahieren (129) eines Richtungsmodellbildanteils aus der 2D-Modellbildreferenz und Extrahieren eines Richtungsszenenbildanteils, sodass ein 1D-Modellbildmerkmalsvektor (133) und ein 1D-Messszenenmerkmalsvektor (143) vorliegen, und
- Korrelieren des 1D-Modellbildmerkmalsvektor mit dem 1D-Messszenenmerkmalsvektor, sodass eine Übereinstimmungsinformation in Form eines maximalen Korrelationskoeffizienten (782) und einer sich aus dem Korrelationsmaximum ergebenden Richtung vorliegt,
- Urteilen über ein Vorhandensein des gesuchten Unterwasserobjektes und einer sich aus dem Korrelationskoeffizienten resultierenden statistischen Signifikanz, und
- Bestimmen einer Objektausrichtung in einer Messszene anhand einer Richtungslage des maximalen Korrelationskoeffizienten.

2. Verfahren nach Anspruch 1, **dadurch gekennzeichnet, dass** das Verfahren für ein zweites Messszenenbild oder drittes Messszenenbild oder für weitere Messszenenbilder angewandt wird.

3. Verfahren nach Anspruch 1, **dadurch gekennzeichnet, dass** das Verfahren für ein zweites Modellbild oder drittes Modellbild oder für weitere Modellbilder angewandt wird.

4. Verfahren nach einem der vorherigen Ansprüche, **dadurch gekennzeichnet, dass** ein Bewerten der Übereinstimmungsinformation mittels eines Signifikanzniveaus erfolgt.

5. Verfahren nach Anspruch 4, **dadurch gekennzeichnet, dass** beim Bewerten der Übereinstimmungsinformation das Ermitteln eines Maximums oder mehrerer Maxima erfolgt.

6. . Verfahren nach einem der vorherigen Ansprüche, **dadurch gekennzeichnet, dass** die 2D- Modellbildreferenz und/oder die 2D- Messszenenbildreferenz segmentiert wird, sodass Sektoren vorliegen.

7. Verfahren nach einem der vorherigen Ansprüche, **dadurch gekennzeichnet, dass** die 2D- Modellbildreferenz und/oder die 2D- Messszenenbildreferenz unterteilt wird, sodass Abschnitte vorliegen.

8. Verfahren nach einem der vorherigen Ansprüche, **dadurch gekennzeichnet, dass** vor dem jeweiligen spektralen Transformieren das Messszenenbild und/oder das Modellbild aufbereitet werden.

9. Rechner, der derart eingerichtet ist, dass er ein Verfahren nach einem der vorherigen Ansprüche ausführt.

10. . Messsystem mit einem Sonar, welches einen Rechner nach Anspruch 9 aufweist, wobei das Sonar die jeweiligen Objektbilder ermittelt.

11. Wasserfahrzeug, welches einen Rechner nach Anspruch 9 und/oder ein Messsystem nach Anspruch 10 aufweist.

**Claims**

1. Method for identifying and/or locating an underwater object, in particular an underwater pipeline, wherein the method comprises the following steps:

   - generating or using a model image (103) of the underwater object,
   - spectrally transforming the model image, in particular determining a 2D power spectral density of the model image, so that a 2D model image reference is available,
   - ascertaining or using a first measurement scene image (113), wherein the measurement scene image comprises in particular an image detail from a terrain searched for the underwater object, and
   - spectrally transforming (125) the first measurement scene image, in particular determining a 2D power spectral density of the measurement scene image, so that a 2D object image reference is available,
   - extracting (129) a direction model image component from the 2D model image reference and extracting a direction scene image component, so that a 1D model image feature vector (133) and a 1D measurement scene feature vector (143) are available, and
   - correlating the 1D model image feature vector with the 1D measurement scene feature vector, so that match information in the form of a maximum correlation coefficient (782) and a direction obtained from the correlation maximum is available,
   - passing judgement on a presence of the sought underwater object and of a statistical significance resulting from the correlation coefficient, and
   - determining an object orientation in a measurement scene on the basis of a bearing of the maximum correlation coefficient.

2. Method according to Claim 1, **characterized in that** the method is used for a second measurement scene image or third measurement scene image or for further measurement scene images.

3. Method according to Claim 1, **characterized in that** the method is used for a second model image or third model image or for further model images.

4. Method according to one of the preceding claims, **characterized in that** the match information is rated by means of a significance level.

5. Method according to Claim 4, **characterized in that** the rating of the match information involves a maximum or multiple maxima being ascertained.

6. Method according to one of the preceding claims, **characterized in that** the 2D model image reference and/or the 2D measurement scene image reference is segmented, so that sectors are available.

7. Method according to one of the preceding claims, **characterized in that** the 2D model image reference and/or the 2D measurement scene image reference is divided, so that sections are available.

8. Method according to one of the preceding claims, **characterized in that** the respective spectral transformation is preceded by the measurement scene image and/or the model image being conditioned.

9. Computer configured to carry out a method according to one of the preceding claims.

10. Measuring system having a sonar that has a computer according to Claim 9, wherein the sonar ascertains the respective object images.

**11.** Watercraft that has a computer according to Claim 9 and/or a measuring system according to Claim 10.

**Revendications**

**1.** Procédé pour identifier et/ou localiser un objet sous-marin, en particulier un pipeline sous-marin, le procédé comprenant les étapes suivantes

- générer ou utiliser une image modélisée (103) de l'objet sous-marin,
- transformer spectralement l'image modélisée, en particulier déterminer un spectre de densité de puissance 2D de l'image modélisée de manière à obtenir une image modélisée 2D de référence,
- déterminer ou utiliser une première image de la scène de mesure (113), l'image de la scène de mesure comprenant en particulier une section d'image d'un terrain exploré à la recherche de l'objet sous-marin, et
- transformer spectralement (125) la première image de la scène de mesure, en particulier déterminer un spectre de densité de puissance 2D de l'image de la scène de mesure de manière à obtenir une image 2D de référence de l'objet,
- extraire (129) une composante directionnelle de l'image modélisée 2D de référence et extraire une composante directionnelle de l'image de la scène de manière à obtenir un vecteur de caractéristiques 1D de l'image modélisée (133) et un vecteur de caractéristiques 1D de la scène de mesure (143), et
- corréler le vecteur de caractéristiques de l'image modélisée 1D et le vecteur de caractéristiques 1D de la scène de mesure afin d'obtenir une information de concordance sous la forme d'un coefficient de corrélation maximum (782) et d'une direction résultant du maximum de corrélation,
- juger de la présence de l'objet sous-marin recherché et d'une signification statistique résultant du coefficient de corrélation, et
- déterminer une orientation de l'objet dans une scène de mesure sur la base d'une position directionnelle du coefficient de corrélation maximal.

**2.** Procédé selon la revendication 1, **caractérisé en ce que** le procédé est appliqué à une deuxième image de la scène de mesure ou à une troisième image de scène la de mesure ou à d'autres images de la scène de mesure.

**3.** Procédé selon la revendication 1, **caractérisé en ce que** le procédé est appliqué à une deuxième image modélisée ou à une troisième image modélisée ou à d'autres images modélisées.

**4.** Procédé selon l'une des revendications précédentes, **caractérisé en ce qu'**une évaluation de l'information de concordance est effectuée au moyen d'un niveau de signification.

**5.** Procédé selon la revendication 4, **caractérisé en ce que** lors de l'évaluation de l'information de concordance, la détermination d'un maximum ou de plusieurs maxima est effectuée.

**6.** Procédé selon l'une des revendications précédentes, **caractérisé en ce que** l'image modélisée 2D de référence et/ou l'image de la scène de mesure 2D de référence est/sont segmentée(s) de manière à obtenir des secteurs.

**7.** Procédé selon l'une des revendications précédentes, **caractérisé en ce que** l'image modélisée 2D de référence et/ou l'image de scène de mesure 2D de référence est/sont divisée(s) de manière à obtenir des sections.

**8.** Procédé selon l'une des revendications précédentes, **caractérisé en ce que** l'image de la scène de mesure et/ou l'image modélisée est/sont préparée(s) avant la transformation spectrale respective.

**9.** Ordinateur qui est conçu pour mettre en œuvre un procédé selon l'une des revendications précédentes.

**10.** Système de mesure avec sonar, comportant un ordinateur selon la revendication 9, dans lequel le sonar détermine les images respectives d'objets.

**11.** Véhicule aquatique comportant un ordinateur selon la revendication 9 et/ou un système de mesure selon la revendication 10.

Fig. 1

Fig. 2

Fig. 3

403 (1)

1+N

403

415                                        415

401

2N      1

        2

1+N

419

403

417

**Fig. 4**

507

517    · · ·    527

537    561    · · ·    561

547    561    561

**Fig. 5**

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5161204 A

**In der Beschreibung aufgeführte Nicht-Patentliteratur**

- **JAE. S. LIM.** Two-Dimensional Signal and Image Processing. PTR Prentice Hall, Inc, 1990
- **K.D. KAMMEYER ; K. KROSCHEL.** Digitale Signalverarbeitung, Filterung und Spektralanalyse. GWV Fachverlage GmbH, 2009, vol. 7
- **J. S. BENDAT ; A.G. PIERSOL.** Random Data: Analysis and Measurment Procedures. Wiley & Sons, Inc, 1971
- **DENNIS V. LINDLEY ; WILLIAM F. SCOTT.** New Cambridge Statistical Tables. Cambridge University Press, 2003